# EUROPÄISCHE PATENTANMELDUNG

(11) **EP 0 630 779 A2**
(43) Veröffentlichungstag der Anmeldung: **28.12.1994**
(21) Anmeldenummer: 94109518.4
(22) Anmeldetag: 21.06.1994
(51) Int. Cl.: B60P 1/44, B66F 9/065

(54) **Nutzfahrzeug zum Aufnehmen und Absetzen von Containern sowie zugehöriges Umsetzsystem**

(30) Priorität: 24.06.1993 DE 4320988
(71) Anmelder: Paul, Josef, D-94474 Vilshofen (DE)
(72) Erfinder: Paul, Josef, D-94474 Vilshofen (DE)
(74) Vertreter: Matschkur, Götz, Lindner Patent- und Rechtsanwälte

(57) **Zusammenfassung**

Nutzfahrzeug zum Aufnehmen und Absetzen von auf der Ladeplattform über Roll- oder Gleitbahnen verschiebbaren und in der Transportstellung arretierbaren Containern, die durch eine rückwärtige Hubeinrichtung angehoben bzw. abgesenkt werden, wobei die Hubeinrichtung eine Ladebordwand (4) ist, die zwischen einer vertikalen Transportstellung und einer mit der Ladeplattform (1) fluchtenden horizontalen Übergabestellung und einer am Boden aufliegenden Aufnahmestellung verschwenk- und höhenverstellbar ist, und wobei zur Verschiebung der Container (33) eine Seilwinde (6) mit seitlich neben dem Nutzfahrzeug verlaufenden Seilzügen (13,14) vorgesehen ist, die am Container angreifend um Rollen (38) am freien Ende der Ladebordwand (4) umlenkbar sind.

## Beschreibung

Die Erfindung bezieht sich auf ein Nutzfahrzeug zum Aufnehmen und Absetzen von auf der badeplattform über Roll- oder Gleitbahnen verschiebbaren und in der Transportstellung arretierbaren Containern, die durch eine rückwärtige Hubeinrichtung angehoben bzw. abgesenkt werden, sowie auf ein angepaßtes Lade- und Umsetzsystem.

Nutzfahrzeuge zum selbsttätigen Aufnehmen und Absetzen von Containern auf der Ladeplattform sind in den unterschiedlichsten Ausführungsformen bekanntgeworden. Zum einen sind in verschiedenen Ausführungsformen Aufbauten mit einem gegenüber dem Fahrzeugrahmen anhebbaren und kippbaren Schieberahmen vorgeschlagen worden, der in der gekippten Stellung eine Gleitplattform bildet, die ein Herunterlassen und Hochziehen der Container ermöglicht, wobei besondere Zugschlitten auf dem Schieberahmen angeordnet sind, die das Hochziehen und Herunterlassen bewerkstelligen. Diese Aufbauten sind jedoch außerordentlich kompliziert, teuer und wegen des gesonderten Aufbaus auf dem Fahrzeugrahmen auch hochbauend, so daß sie sich in der Praxis nur für spezielle Anwendungsfälle haben durchsetzen können. Als allgemeines Transport- und Umsetzsystem sind sie wenig geeignet.

Darüber hinaus gibt es auch Nutzfahrzeuge, bei denen die Ladeplattform stets horizontal ist und das Aufheben und Absetzen der Container durch gabelstaplerartige Hubgerüste erfolgt. Neben Anordnungen, bei denen der gesamte Gabelstapler auf der Plattform verfahrbar ist und dabei auch noch die Gabeln um die vertikale Mittelachse gedreht werden können, um mehrere Behälter hinteinander absetzen zu können (DE 36 21 366 A1), sind dabei auch Ausführungsformen vorgeschlagen worden, bei denen die Hubsäulen der Gabelarme seitlich ausfahrbar sind, so daß die Container zwischen den Hubsäulen hindurch bewegt werden können, so daß die Hubsäulen ortsfest am Ende des Fahrzeugs verbleiben können. Beide Anordnungen sind aber wiederum sehr kompliziert und teuer und somit ebenfalls wiederum nur für Spezialfahrzeuge einsetzbar.

Der Erfindung liegt daher die Aufgabe zugrunde, ein Nutzfahrzeug der eingangs genannten Art so auszugestalten, daß bei einfachem Aufbau ein selbsttätiges Aufheben, Absetzen und Überschieben der Container möglich ist.

Zur Lösung dieser Aufgabe ist erfindungsgemäß vorgesehen, daß die Hubeinrichtung eine Ladebordwand ist, die zwischen einer vertikalen Transportstellung und einer mit der Ladeplattform fluchtenden horizontalen Übergabestellung und einer am Boden aufliegenden Aufnahmestellung verschwenk- und höhenverstellbar ist, und daß zur Verschiebung der Container eine Seilwinde mit seitlich neben dem Nutzfahrzeug verlaufenden Seilzügen vorgesehen ist, die am Container angreifend um Rollen am freien Ende der Ladebordwand umlenkbar sind.

Durch die erfindungsgemäße Ausbildung können Container sehr einfach auf die Ladeplattform bewegt und von ihr auch wieder herunter, entweder am Boden oder auf einer Rampe oder einem anderen Fahrzeug, beispielsweise ein Eisenbahnwaggon, abgesetzt und umgesetzt werden. Dabei bedarf es neben der beschriebenen Seilwinde lediglich einer verstellbaren Ladebordwand, wobei diese auf ihrer Oberseite in gleicher Weise ausgebildet ist wie die Ladeplattform. Sollte die Ladeplattform mit Rollen versehen sein, um die Container darauf zu bewegen, so gilt dies auch für die Ladebordewand, während umgekehrt in Fällen, in denen die Container auf sog. Flats, d.h. mit Rollen versehenen Paletten, angeordnet sind, lediglich Gleitbahnen bzw. Führungsbahnen auf der Ladeplattform und der Ladebordwand erforderlich sind.

Mit besonderem Vorteil ist dabei die Ausbildung so getroffen, daß die Ladebordwand über seitliche Parallelogrammgestänge am Fahrzeug angelenkt ist, während die untere Strebe als Hydraulikzylinder zur Verschwenkung zwischen der Horizontalen und der Vertikalen ausgebildet ist.

Die Ladebordwand kann dabei im einfachsten Fall mittels horizontal liegend im Fahrzeugrahmen eingebauten Hydraulikzylindern über Ketten oder Seilzüge anhebbar sein, wobei während des Anhebens der als Hydraulikzylinder ausgebildete Schenkel des Parallelogrammgestänges in seiner Länge nicht verändert wird. Wird er aber in der angehobenen Stellung der Ladebordwand ausgefahren, so erfolgt dadurch die Verschwenkung der Ladebordwand in die vertikale Transportstellung.

In üblicher Weise sollen vorzugsweise hydraulische Abstützungen vorgesehen sein, die bevorzugt im Bereich der Anlenkung der Ladebordwand liegen sollen, um während des Anhebens, Absenkens oder Überschiebens das hintere Ende des Nutzfahrzeugrahmens festzuhalten und Kippbewegungen über die Fahrzeugfederung zu vermeiden.

Die Seilwinde soll bevorzugt am vorderen Ende der Ladeplattform angeordnet und die Seilzüge über seitlich ausfahrbare Umlenkrollen geführt sein, so daß einerseits beim Transport, also während der Fahrt, die Umlenkrollen eingezogen sind und nicht störend seitlich überstehen, während zum Auf- und Absetzen und Überschieben der Container die Führungsrollen seitlich über die Container überstehend angeordnet sein müssen, damit die Seilzüge außen an den Containern - und selbstverständlich auch an der Bordwand - vorbeilaufen können.

Sehr einfach läßt sich die Seilwinde dadurch ausbilden, daß die Seilzüge auf zwei nebeneinander angeordneten Seiltrommeln aufgewickelt sind, die mittels stirnseitiger Zahnräder miteinander gekoppelt sind und von denen die eine auf der Antriebswelle eines Motors sitzt. Durch die direkte Kopplung erfolgt eine synchrone gegenläufige Verdrehung der beiden Seiltrommeln, so daß ein gleichmäßigs Absetzen und Hochziehen möglich ist. Je nach der Bewegungsrichtung verlaufen dabei die Seilzüge entweder über die umlenkrollen am freien Ende der Ladebordwand (Absetzen der Container) oder aber direkt von den Umlenkrollen neben den Seilwinden zum Container (Hochziehen der Container).

Um das Ausziehen der Seilzüge aus der eingefahrenen Stellung zu vereinfachen, können in Ausgestaltung der Erfindung mit den Seiltrommeln vorzugsweise über einen Kettenantrieb in Drehverbindung stehende, seitlich neben ihnen angeordnete Auszieh-Seilrollen mit Seilandruckkulissen vorgesehen sein.

Das vorstehend angesprochene Absetzen, Aufheben und Umsetzen von Containern auf und von einem erfindungsgemäßen Nutzfahrzeug läßt sich nicht in allen denkbaren Anwendungsfällen realisieren, da z.B. beim Umsetzen auf andere Großfahrzeuge, beispielsweise Eisenbahnwaggons, oder aber auch beim Umsetzen und Versetzen in Containerbahnhöfen die entsprechende Positionierung des Nutzfahrzeugszeugs, um dies mit den bordeigenen Mitteln durchzuführen, nicht möglich ist. Aus diesem Grund ist erfindungsgemäß in Ergänzung des Belade- und Umsetzkonzepts ein Transportfahrzeug zum Laden und Umsetzen von Containern in Form eines allradgelenkten Fahrzeugs mit einer Fahrerkabine und einem Hubsystem mit die Container untergreifenden Staplergabeln vorgesehen, welches erfindungsgemäß dadurch gekennzeichnet ist, daß die Hubeinrichtung einen schwingend aufgehängten Hubarm aufweist, der als zwischen dem freien Ende und dem auf einer Gleitkonsole linear verschiebbar am Fahrzeug angelenkten Ende an einem schwenkbar am Fahrzeug aufgehängten Schwingarm angelenkt und durch vorzugsweise hydraulische Hubzylinder verstellbar ist, wobei die Anordnung so getroffen ist, daß beim Betätigen des Hubzylinders die Gleitkonsole so verschoben wird, daß das freie Ende des Hubarms im wesentlichen in einer vertikalen Ebene bewegt wird.

Durch die erfindungsgemäße besondere Aufhängung läßt es sich bei entsprechender Einstellung der jeweiligen Hebelarme und der Länge des Schwingarms erreichen, daß anstelle der normalen Bewegung des die Gabeln tragenden freien Endes des Hubarms auf einer Kreisbahn eine im wesentlichen lineare vertikale Bewegung zustande kommt. Dies hat den Vorteil, daß man mit Hilfe einer Hubeinrichtung mit schwingend aufgehängten Hubarmen die Container vertikal aufnehmen und absetzen kann und somit die Container auch handhaben kann, wenn sie unmittelbar vor einer Wand angeordnet sind oder wenn eine ganze Vielzahl von Containern im dichten Abstand nebeneinander abgestellt sind. Gleichwohl hat man aber durch die erfindungsgemäße Ausbildung den großen Vorteil, daß die bei Gabelstaplern notwendigen Hubgerüste entfallen. Dadurch ergibt sich nicht nur eine wesentlich bessere Sicht, die durch die Hubgerüste ja sehr stark eingeschränkt ist, sondern der Bauaufwand ist auch insgesamt wesentlich geringer, da die Ausbildung des schwingenden Hubarms in Verbindung mit der rückwärtigen Abstützung an den Gleitkonsolen sehr viel einfacher realisierbar ist als die Ausbildung eines entsprechend kräftigen Hubgerüsts. Darüber hinaus steht bei der erfindungsgemäßen Konstruktion - im Gegensatz zu einem Hubgerüst - der Container nicht nach oben über, so daß ein Container unmittelbar unter Dach abgestellt werden kann.

Der am Hubarm angelenkte Gabelträger soll dabei bevorzugt über eine teleskopisch verstellbare Parallelograrnführungsstange zur Parallelführung der Gabeln bei der Hubbewegung mit einem Aufsatz der Gleitkonsole verbunden sein.

Im Sinne der vorstehend bereits beschriebenen Verbesserung der Sichtverhältnisse bei der Umsetzung von Containern mit Hilfe eines derartigen Transportfahrzeugs liegt eine Weiterbildung der Erfindung, bei der die Fahrerkabine seitlich verschiebbar ist.

Das Aufnehmen, Absetzen und Umsetzen von Containern mit Hilfe eines solchen Transportfahrzeugs läßt sich in weiterer Ausgestaltung der Erfindung noch dadurch verbessern, daß die Hubeinrichtung mit der Fahrerkabine auf einer gegenüber dem Fahrzeuggrundrahmen mit den Rädern drehbaren Plattform angeordnet ist, so daß ohne Bewegung des Fahrzeugs selbst ein auf der einen Seite aufgenommener Container in irgendeiner anderen Richtung auf ein dort befindliches anderes Fahrzeug oder eine dort befindliche Rampe umgesetzt werden kann.

Zusätzlich zu dieser drehbaren Plattform für die Hubeinrichtung oder ggf. auch alternativ zu der Verwendung einer solchen drehbaren Plattform kann in Weiterbildung der Erfindung vorgesehen sein, daß die Vorder- und Hinterräder jeweils synchron versetzt um 45° verstellbar sind, derart, daß das Fahrzeug insgesamt sich am Ort um seine vertikale Mittelachse dreht.

Ganz besonders vorteilhaft ist es dabei, wenn die, vorzugsweise als mittig zwischen den Einzelreifen aufgehängte Zwillingsreifen ausgebildeten, Räder nicht nur um 45° verstellbar sind, um die genannte Verdrehung des Fahrzeugs am Ort zu ermöglichen, sondern jeweils um 90° verschwenkbar sind, so daß das Fahrzeug aus einer Aufnahme- oder Absetzstellung nach Möglichkeit versetzt herausfahren bzw. wieder einfahren kann.

Anstelle der vorstehend beschriebenen Ausführungsform hat sich insbesondere für mobile Einsatzzwecke, wie sie beispielsweise auch im Militärbereich gegeben sind, eine vereinfachte Ausführungsform als besonders zweckmäßig erwiesen, bei der unter Weglassung der drehbaren Plattform für die Fahrerkabine das Fahrzeug vorne mit starren Zwillingsrädern und hinten mit einer pendelnd aufgehängten angelenkten Hinterachse mit Einzelrädern versehen ist, wobei vorzugsweise beide Achsen angetrieben sind. Dieses Umschlagsgerät ist geländetauglich und zeichnet sich durch die Ausmaße der Vorderachsbereifung von beispielsweise 2650 mm für gute Seitenstabilität aus. Die pendelnd angeordnete angelenkte Hinterachse gewährleistet einen Wendekreis von etwa 16 m, wobei je nach Notwendigkeit die Pendelachse sperrbar ausgebildet sein kann.

Um das Transportfahrzeug kleinräumig verpacken zu können, insbesondere um es in einem Normcontainer (20 Fuß-Container) unterbringen und darin an eine neue Einsatzposition verbringen zu können, kann in Ausgestaltung der Erfindung weiter vorgesehen sein, daß die Fahrerkabine um eine Bodenkante um etwa 90° in eine flachliegende Transportstellung auf dem Chassis verschwenkbar ist.

In Abwandlung der weiter oben beschriebenen Ausführungsform, bei der die Fahrerkabine seitlich verschiebbar ist, kann für besondere Anwendungszwecke auch vorgesehen sein, daß die Fahrerkabine zwischen zwei Hubarmen angeordnet ist, so daß von ihr aus das eigentliche Hebezeug besonders gut einsehbar ist.

Anstelle der vorstehend beschriebenen Ausbildung des am Hubarm der Hubvorrichtung angelenkten Hebezeugs als Gabelträger, so daß die Hubvorrichtung wie ein Gabelstapler arbeitet, jedoch ohne daß hierfür ein Hubgerüst vorgesehen werden muß, kann auch ein Spreader eingesetzt werden, wobei der Spreader bevorzugt an einem Drehkopf am freien Ende eines am Spreader-Tragkopf befestigten längsverstellbaren Tragarms aufgehängt ist.

Im Sinne der vorstehend bereits angesprochenen besonders kleinräumigen Zusammenlegbarkeit des Transportfahrzeugs, um es beispielsweise als selbstfahrende Arbeitsmaschine auf Straßen verfahren zu können, oder um es auch in einem Container zu transportieren, ist in Ausgestaltung der Erfindung vorgesehen, daß der gegenüber einem Normcontainer verkürzte Spreader vorzugsweise hydraulisch aus- und einschwenkbare Spreaderarme aufweist, deren den Container in der ausgeschwenkten Arbeitsstellung seitlich überragende Enden mittels schräg verlaufender Seile mit den unteren Containereckverschlüssen verbindbar sind.

Durch diese Ausbildung ergibt sich gegenüber üblichen Spreadern, die ja die gesamte Deckfläche eines Normcontainers übergreifende lange Arme aufweisen, um sie in die oberen Eckverschlüsse einhaken zu können, eine sehr stark verkürzte Bauform, die noch dazu durch das Einschwenken der eigentlichen Spreaderarme noch stärker verkleinert werden kann. Dieser Vorteil bedingt auf der anderen Seite die Verwendung von Seilen zur Verbindung der Spreaderarme mit den unteren Containereckverschlüssen, was aber im Hinblick auf die Kleinräumigkeit und die dadurch gegebene Möglichkeit, das Transportfahrzeug als selbstfahrende Arbeitsmaschine auf Straßen fahren zu lassen und es auch in Container verladen zu können, bei weitem wettgemacht wird. Im Sinne der erfindungsgemäßen kleinräumigen Zusammenfaltbarkeit des Hebezeugs kann in Ausgestaltung der Erfindung vorgesehen sein, daß der Spreadertragkopf um etwa 90° aus der Arbeitsstellung in eine nach unten geklappte Transportstellung verschwenkbar ist, wobei dieses Verschwenken am einfachsten durch Ausfahren der teleskopisch verstellbaren Parallelogrammführungsstange erfolgen kann.

Der Spreader kann mit besonderem Vorteil mit einem, vorzugsweise hydraulischen, Seitenschub zum Ausgleich von Versetzungen des Containerschwerpunktes versehen sein, um zu verhindern, daß bei einer nicht genau mittigen Lage des Schwerpunktes des Containers der ganze Spreader auf den Container umgesetzt werden muß. Es genügt, dann, wenn man durch Ankippen des Containers beim Anheben bemerkt, daß der Containerschwerpunkt nicht genau unter der Drehachse des Spreaderkopfs liegt, den Seitenschub zu betätigen, um die notwendige Verschiebung zu einer vertikalen übereinanderliegenden Lage des Containerschwerpunktes und des Spreaderkopfes zu erzielen.

Schließlich liegt es auch noch im Rahmen der Erfindung, ein Videoüberwachungssystem mit einer am vorderen Ende des Chassis befestigten Videokamera und einem Monitor in der Fahrerkabine vorzusehen.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine perspektivische Ansicht eines Lkw mit seitlichen Bordwänden und einer rückwärtigen Ladebordwand sowie einer Seilwinde zwischen der Ladeplattform und deren nur teilweise dargestellten Fahrerkabine,
- Fig. 2: eine Aufsicht auf die Ladeplattform des Nutzfahrzeugs nach Fig. 1,
- Fig. 3: eine vergrößerte Aufsicht auf die Seilwinde mit seitlich ausfahrbaren Umlenkrollen,
- Fig. 4: einen Schnitt längs der Linie IV-IV in Fig. 3,
- Fig. 5: eine Seitenansicht der Ladeplattform des Fahrzeugs - bei abgenommenen seitlichen Bordwänden - mit einem aufgesetzten und einem noch aufzusetzenden, am Boden befindlichen Container,
- Fig. 6: eine vergrößerte Seitenansicht des hinteren Teils des Fahrzeugs mit der Ladebordwand,
- Fig. 7: eine Teilansicht des Fahrzeugs beim Überschieben eines Containers vom Fahrzeug auf eine Rampe,
- Fig. 8: ein Transportfahrzeug zum Umsetzen von auf Nutzfahrzeugen nach den Figuren 1 bis 7 aufsetzbaren Containern auf ein solches Fahrzeug bzw. von einem solchen zu anderen Lager- und Transporteinrichtungen mit einer ein vertikales Anheben der Container ermöglichenden Ausbildung schwingender Hubarme,
- Fig. 9: eine Ansicht des Transportfahrzeugs nach Fig. 8 in der angehobenen Stellung eines Containers,
- Fig.10: eine Aufsicht auf das Transportfahrzeug ohne die drehbare, die Hubeinrichtung und die Fahrerkabine tragende Plattform zur Verdeutlichung der verschiedenen Aufnahme-, Umsetz- und Bewegungsmöglichkeiten des Fahrzeugs,
- Fig.11: eine Seitenansicht eines vereinfachten allradgelenkten Transportfahrzeugs mit der Hubeinrichtung nach den Figuren 8 bis 10,
- Fig.12: eine Aufsicht auf das Chassis des Hubfahrzeugs nach Fig. 11, dessen Räder beidseits um 45° verstellbar sind,
- Fig.13 bis 15: eine Seitenansicht einer weiteren Ausführungsform eines erfindungsgemäßen Transportfahrzeugs mit einem Spreader zum Anheben eines Containers, einmal beim Abheben vom Boden, einmal während des Anhebens und einmal beim Aufsetzen auf ein Transportfahrzeug,
- Fig.16: eine Aufsicht auf das Transportfahrzeug mit dem verdreht davor angeordneten Container,
- Fig.17: eine der Fig. 16 entsprechende Aufsicht, bei der der Seitenschub des Spreaders zum Ausgleich von Versetzungen des Containerschwerpunkts betätigt ist,
- Fig.18: eine Vorderansicht des Transportfahrzeugs mit dem Container entsprechend einer Ansicht von rechts in Fig. 14,
- Fig.19: das Transportfahrzeug mit dem eingeklappten Spreader als selbstfahrende Arbeitsmaschine auf Straßen, und
- Fig.20 und 21: eine Ansicht des Transportfahrzeugs mit weggeklappter Fahrerkabine während des Einfahrens bzw. nach vollständigen Einfahren in einen Transportcontainer.

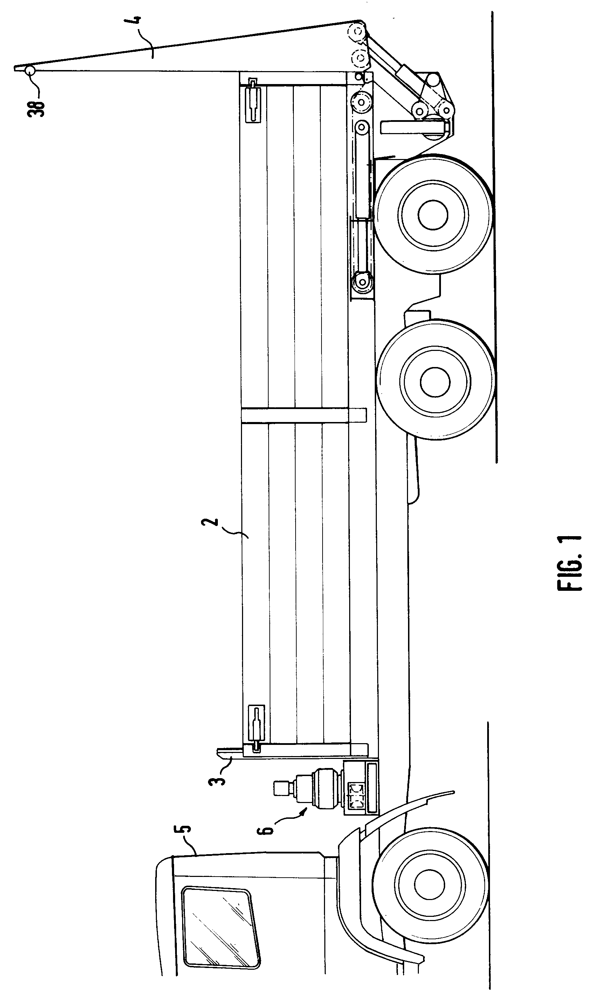

Das in den Figuren 1 bis 7 dargestellte Nutzfahrzeug stellt einen universell verwendbaren Lastwagen dar, auf dessen Ladeplattform 1 nicht nur die in der nachfolgenden Beschreibung im einzelnen behandelten Container auf- und umgesetzt werden können, sondern das sich wegen der speziellen Ausbildung der Ab- und Umsetzeinrichtungen auch als normales Transportfahrzeug eignet, was in Fig. 1 dadurch gekennzeichnet ist, daß dort seitliche Bordwände 2 vorgesehen sind, die zwischen der stets aufgesetzt bleibenden vorderen Bordwand 3 und der als Ladebordwand 4 ausgebildeten hinteren Bordwand angeordnet sein können. Ein solches universell einsetzbares Fahrzeug ist gerade beim Endtransport zum Kunden von besonderem Vorteil, da auf diese Art und Weise vermieden wird, daß ein reiner Containertransporter mit häufig größeren Standzeiten erforderlich ist.

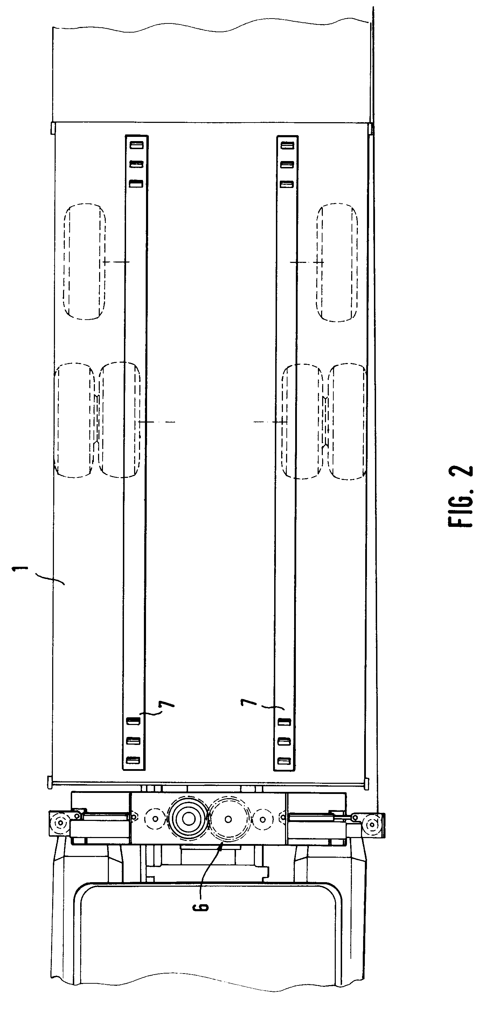

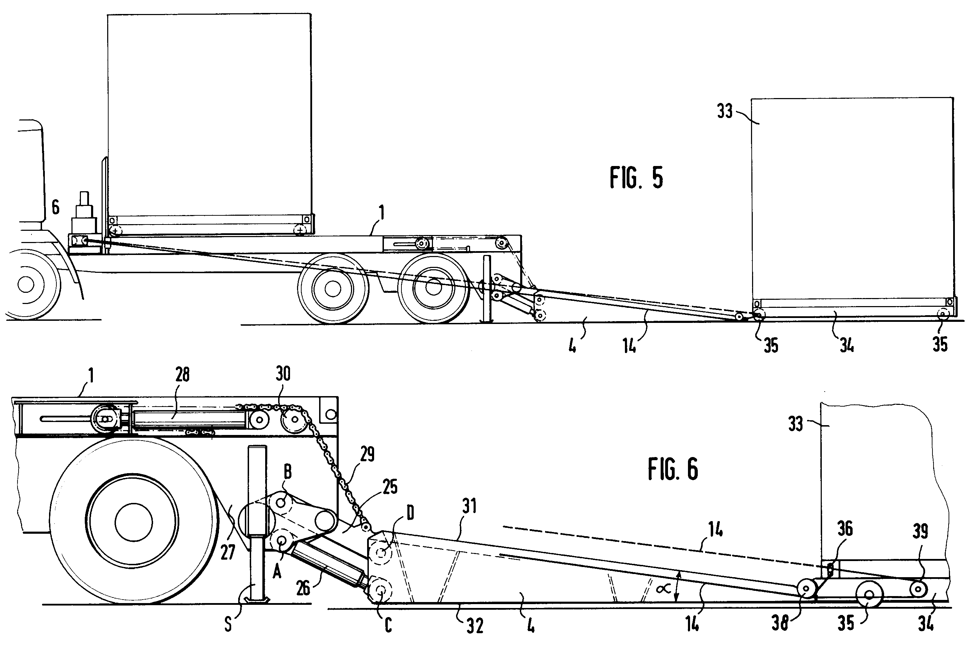

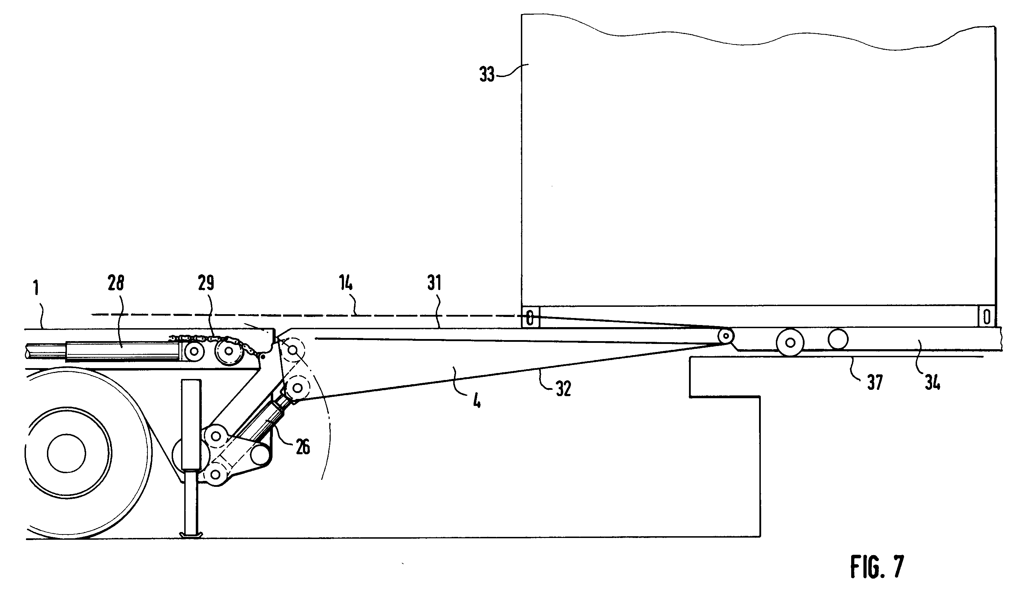

Die Besonderheit des erfindungsgemäßen Nutzfahrzeugs besteht einmal in der Ausbildung der Ladebordwand 4 sowie der zwischen Fahrerkabine 5 und der vorderen Bordwand 3 angeordneten Seilwinde 6, mit Hilfe deren Container von der Ladeplattform 1 heruntergezogen als auch wieder auf sie aufgezogen werden können. In der dargestellten Ausführungsform nach Fig. 2 ist die Ladeplattform 1 mit Rollenbahnen 7 versehen, so daß einfache Container mit im wesentlichen ebenen Boden darauf bewegt werden können. Alternativ könnten diese Rollenbahnen 7 auch weggelassen werden und statt dessen die Container mit Hilfe sog. Flats, d.h. mit Rollen versehener Paletten, bewegt werden, wie dies in den Figuren 5 und 6 angedeutet ist, wobei in diesen Fällen dann anstelle der Rollenbahnen 7 (wie in Fig. 7) Führungsschienen od.dgl. auf der Ladeplattform 2 vorgesehen sein können. Details hierfür sind jedoch aus dem Fahrzeugbau hinlänglich bekannt, so daß sie der besseren Übersichtlichkeit halber in den Zeichnungen nicht mit dargestellt sind.

Die Seilwinde 6 umfaßt zwei nebeneinander angeordnete Seiltrommeln 8 und 9, von denen die erstere direkt auf der Abtriebswelle eines Motors 10 sitzt, während die zweite von der ersten über in Eingriff miteinander stehende stirnseitige Zahnräder 11 und 12 gegenläufig angetrieben wird, so daß beide die jeweiligen Seilzüge 13 bzw. 14 entweder abwickeln oder aufwickeln. Zur einfachen gefahrlosen Bewegung des Seilanfangs nach außen sind dabei seitlich neben den Seiltrommeln Seilrollen 15 und 16 angeordnet, denen Seilandruckkulissen 17 bzw. 18 zugeordnet sind, wobei diese Seilrollen zum Ausziehen des Seils über Antriebsketten 19, 20 mit der Seilwinde zur Erzielung eines Synchronlaufs verbunden sind.

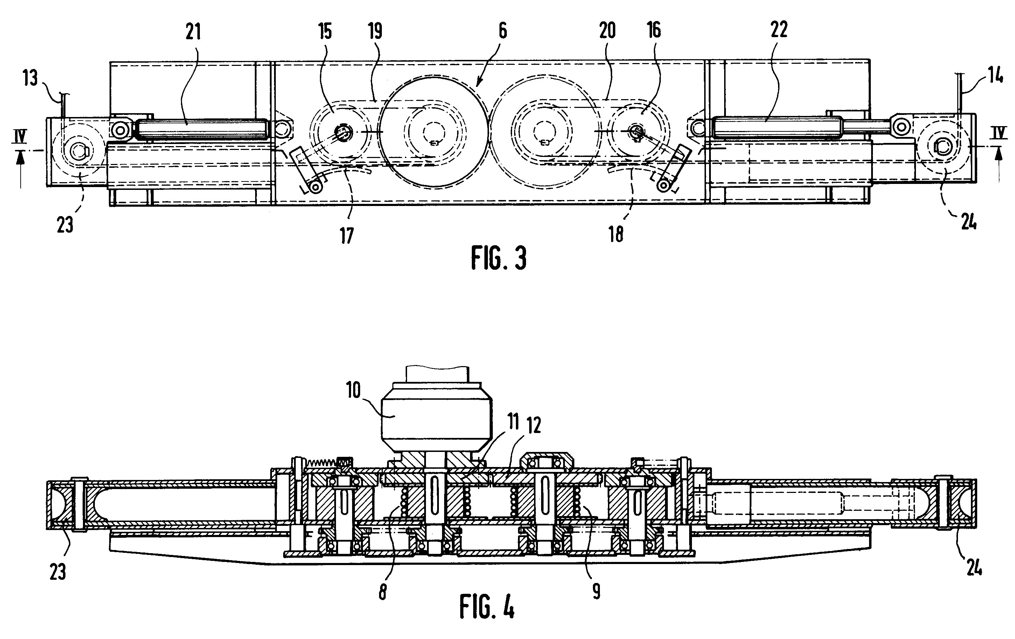

An den Außenseiten des Fahrzeugsaufbaus sind mit Hilfe von Hydraulikzylindern 21 und 22 ausfahrbare bzw. einziehbare Seilumlenkrollen 23, 24 angeordnet. In der normalen Fahr- oder Transportstellung des Fahrzeugs sind diese Rollen eingezogen, damit sie nicht seitlich über die Container resp. den gesamten Fahrzeugaufbau überstehen. Zum Aufnehmen und Absetzen der Container sind sie aber, wie in Fig. 3 rechts gezeigt, nach außen verschoben, so daß die Seilzüge 13, 14 seitlich an den Containern vorbei nach rückwärts geführt werden können, um das weiter unten noch näher zu beschreibende Aufnehmen und Absetzen der Container zu bewerkstelligen.

Die keilförmig ausgebildete Ladebordwand 4 ist an ihrem verdickten inneren Ende mit Hilfe eines Parallelogrammgestänges, bestehend aus einer starren Strebe 25 und einem längsverstellbaren Hydraulikzylinder 26, an seitlichen Backen 27 des Grundchassis des Fahrzeugs angelenkt, so daß beim Hochziehen der Ladeplattform 4 aus der in Fig. 6 gezeigten, am Boden aufliegenden Aufnahme- bzw. Absetzstellung für einen Container mit Hilfe der von einem liegend im Rahmen angeordneten Hydraulikzylinder 28 betätigten Kette 29, die über ein Umlenkzahnrad 30 geführt ist - gleiches gilt selbstverständlich symmetrisch für beide Seiten des Nutzfahrzeugs -, die Ladeplattform im wesentlichen parallel zu sich aus der Stellung nach Fig. 6 in die nach Fig. 7 angehoben wird. Die Einschränkung "im wesentlichen parallel" beruht darauf, daß man in Wahrheit kein vollständiges Parallelogrammgestänge vorsieht, bei dem die beiden Streben exakt parallel zueinander verlaufen und auch gleichlang sind. Statt dessen ist nämlich vorgesehen, daß der Abstand der rahmenseitigen Anlenkpunkte A und B der beiden Streben 25, 26 mit ca. 190 mm etwa 10 mm kleiner ist als der Abstand der ladebordwandseitigen Anlenkpunkte C und D, wobei die Abstützpunkte A,B und C, D jeweils genau vertikal übereinanderliegen. Dieser geänderte Abstand hat zur Folge, daß auch die Strebe 25 etwas länger ist als die Strebe 26 und dies führt schließlich dazu, daß die Ladebordwand 4 beim Anheben um den Keilwinkel α verkippt wird, so daß sie in der angehobenen Stellung so angeordnet ist, daß ihre Oberfläche 31 genau horizontal liegt und nicht wie in der abgesenkten Stellung schräg. Statt dessen ist dann natürlich die Unterseite 32 in der angehobenen Stellung gegenüber der Horizontalen um den Winkel α geneigt. Um zu verhindern, daß beim Absenken der Ladebordwand 4 aus der angehobenen Stellung in die am Boden aufliegende Stellung, oder umgekehrt bei ihrem Anheben, auf der Oberfläche 31 verrutschen kann, sind nichtgezeigte Arretierungen vorgesehen, die während der Hubbewegung in Funktion treten.

Im nachfolgenden soll die Aufnahme- und Absetzbewegung eines Containers anhand der Figuren 5 bis 7 erläutert werden, wobei in diesem Fall der Container 33 auf einem sog. "Flat" 34 mit Rollen 35 angeordnet ist, so daß in diesem Fall die Rollenbahnen 7 auf der Ladeplattform 1 nicht benötigt werden. Diese Rollenbahnen, die dann auch auf der Oberfläche 31 der Ladebordwand 4 vorgesehen sein müßten, braucht man nur, wenn man den Container ohne den Flat 34 aufnehmen und absetzen will.

Ausgehend von der in Fig. 5 erkennbaren Stellung werden die beiden Seilzüge 13 und 14 - für die Aufnahmebewegung gilt die gestrichelte Stellung in den Figuren 5 und 6 - in die Öffnungen 36 der Containereckverschlüsse des Containers, der seinerseits mit dem Flat 34 durch nichtgezeigte Verriegelungsmittel verbunden ist, eingehängt und der Container auf dem Flat auf die Ladebordwand 4 aufgezogen. Dort wird er, wie bereits weiter oben angesprochen, verriegelt und dann die Plattform in die in Fig. 7 gezeigte Stellung angehoben. Von dieser Stellung aus kann er entweder auf die Ladeplattform 1 gezogen werden, oder man kann den Container umsetzen. Die Fig. 7 zeigt dabei den Fall, daß man einen Container von der Ladeplattform über die horizontalgestellte Ladebordwand auf einer Rampe 37, resp. einem an dieser Stelle angeordneten anderen Fahrzeug, beispielsweise einem Eisenbahnwaggon, überschiebt, bzw. von dort übernimmt. Dabei ist in Abweichung von den Figuren 5 und 6 auch ein Fall dargestellt, bei dem der Flat 34 nicht mit auf das Fahrzeug übernommen wird, sondern der Container vom Flat heruntergezogen wird, während das Flat selbst auf der Laderampe 37 stehenbleibt bzw. der Container erst auf der Laderampe auf den Flat 34 aufgeschoben wird.

Beim Absetzen eines Containers vom Fahrzeug erfolgt das Einhängen der Seilzüge 13 und 14 in anderer Weise, indem nämlich die Seilzüge 13 bzw. 14 in der in den Figuren 5 und 6 ausgezogen dargestellten Weise in die Containereckverschlüsse oder ähnliche Öffnungen 36 der Container 33 so eingehängt werden, daß sie dabei die Umlenkrollen 38 am freien Ende der Ladebordwand 4 umschlingen. Dies ermöglicht es, dann allerdings mit praktisch sehr weit ausgezogenen Seilzügen, den Container von der Ladeplattform nach rückwärts auf die Ladebordwand 4 zu ziehen, und dann nach dem Absenken in die Stellung nach Fig. 6 durch weiteres Einrollen der Seilzüge den Container von der Ladeplattform herunterzuziehen, so daß er schließlich in die in Fig. 6 gezeigte Absetzstellung gelangt. Um dabei im letzten Bewegungsabschnitt des Herunterziehens des Containers 33 von der Ladebordwand 4 in die in Fig. 6 gezeigte Stellung eine bessere Kraftaufteilung der Kraft der Seilwinde zu haben, als es durch den steilen Umschlingungswinkel der Umlenkrolle 38 in Fig. 6 der Fall ist, kann ggf. am Flat 34 eine eigene Umlenkrolle 39 vorgesehen sein. Der Seilzug 14 verläuft dann nicht, wie in Fig. 6 gezeigt, ausgezogen um die Umlenkrolle 38 direkt zur Aufnahme 36, sondern von der Umlenkrolle zunächst horizontal weiter bis zur flatseitigen Umlenkrolle 39 und dann erst zur Aufnahme 36, da auf diese Weise praktisch die gesamte Zugkraft des Seils zum Herunterziehen des Containers auf den Flat parallel zur Laufbahn zur Verfügung steht.

Nach dem vollständigen Aufnehmen eines Behälters auf dem Fahrzeug, wenn also dann die Ladebordwand 4 horizontalliegend wieder leer ist, wird der die untere Strebe des unvollständigen Parallelogrammgestänges darstellende Hubzylinder 26 ausgefahren und verschwenkt dabei die Ladebordwand 4 aus der Stellung nach Fig. 7 in die Transportstellung nach Fig. 1.

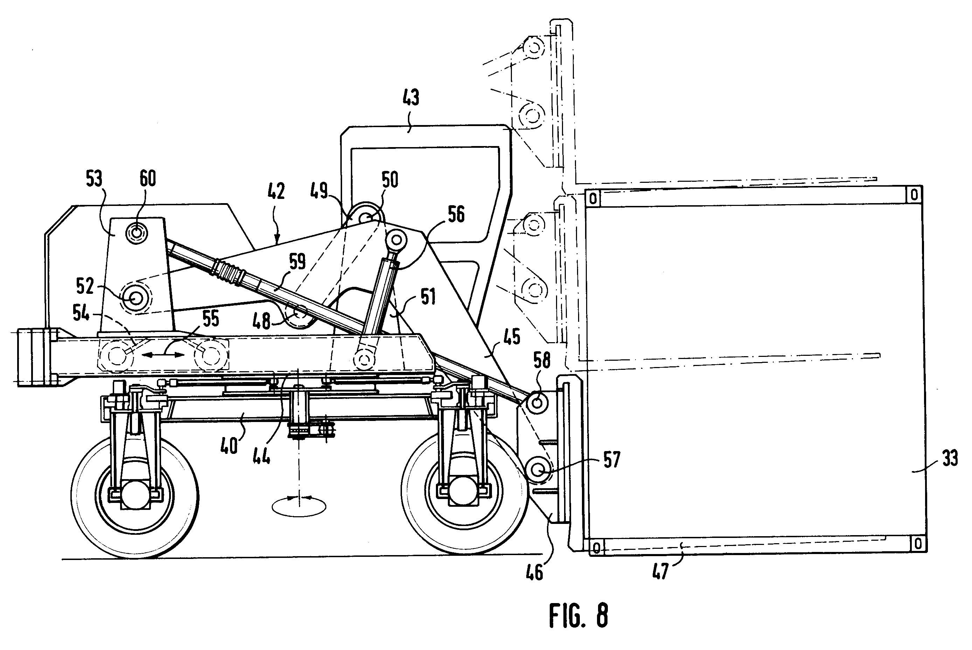

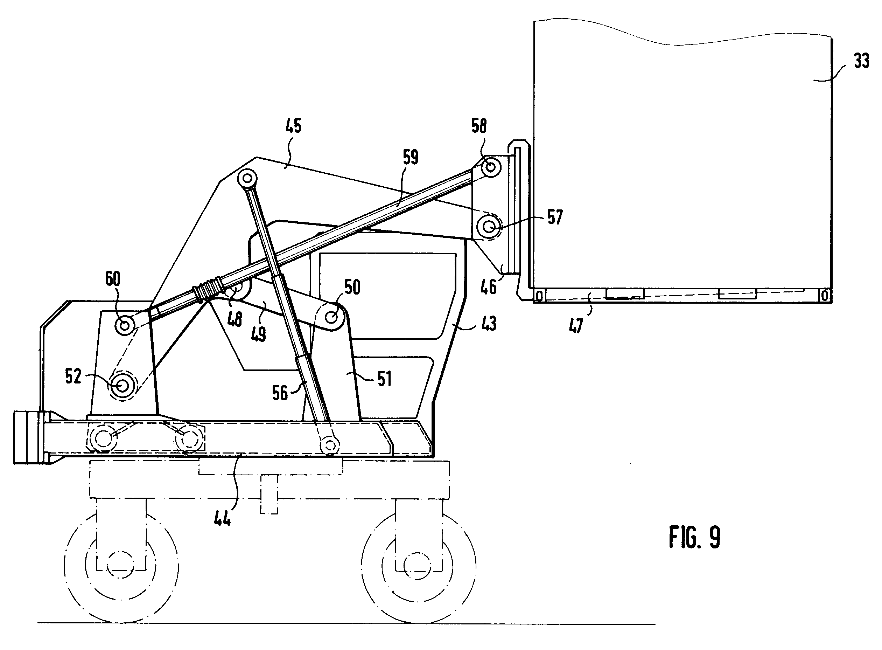

In vielen Fällen ist weder das Aufnehmen der Container in Längsrichtung direkt auf das Fahrzeug mit Hilfe der Ladebordwand 4 möglich und ebensowenig das Aufschieben oder Überschieben auf ein anderes Fahrzeug, da insbesondere beim Überschieben oder Übernehmen von Eisenbahnwaggons die Längsrichtung des Nutzfahrzeugs senkrecht zur Längsrichtung des Eisenbahnwaggons stehen muß, um diese Überschiebebewegung mit Hilfe der Seilzüge bewerkstelligen zu können, während andererseits man natürlich auf dem Eisenbahnwaggon häufig auch die Container nicht quer anordnet, sondern in gleicher Weise in Längsrichtung hintereinander, wie auf der Ladeplattform 1 des Nutzfahrzeugs. Um hier eine sinnvolle Abrundung des Ladesystems zur Verfügung zu stellen, ist in Ausgestaltung der Erfindung ein zusätzliches Transportfahrzeug zum Laden und Umsetzen der Container in Form eines allradgelenkten Fahrzeugs mit einer Fahrerkabine und einem Hubsystem mit die Container untergreifenden Staplergabeln vorgesehen, wie es anhand zweier Ausführungsbeispiele in den Figuren 8 bis 10 einerseits und 11 und 12 andererseits dargestellt ist.

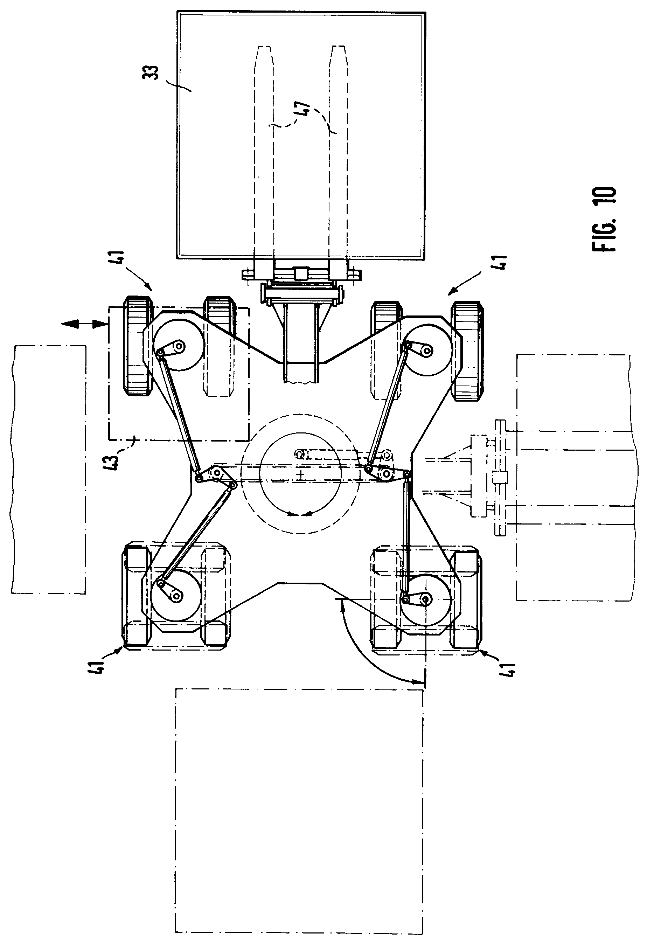

Bei der in den Figuren 8 bis 10 dargestellten Variante eines solchen Transportfahrzeugs ist das Grundchassis 40 mit vier Zwillingsrädern versehen, wobei die einzelnen Räder jedes Zwillingsradpaars 41 beabstandet sind und die Radachsen an einer vertikalen, zwischen ihnen verlaufenden Aufhängung abgestützt sind, so daß eine in Fig. 10 im einzelnen dargestellte Verschwenkung der Räder aus der ausgezogenen normalen Vorwärtsfahrstellung in um 90° versetzte Stellungen möglich ist, so daß das Fahrzeug, ohne sich sonst zu bewegen, durch dieses Umstellen der Räder aus seiner ursprünglichen Einfahrposition um 90° versetzt nach links oder rechts herausfahren kann, ohne daß dabei auch nur die Hubvorrichtung in irgendeiner Weise umgestellt werden muß.

Die Hubvorrichtung 42 ist gemeinsam mit der Fahrerkabine 43 auf einer gegenüber dem Grundchassis 40 drehbaren Plattform 44 angeordnet, so daß unabhängig von der besonderen Allradlenkbarkeit des Fahrzeugs die Aufnahme und das Absetzen von Containern mit Hilfe der Hubvorrichtung 42 auch durch entsprechende Verdrehung der Plattform stattfinden kann. Die Fahrerkabine 43 ist dabei, wie in Fig. 10 strichpunktiert angedeutet ist, seitlich herausfahrbar, so daß beim Manipulieren der Container der Fahrer seitlich an den Containern 33 vorbeisehen kann.

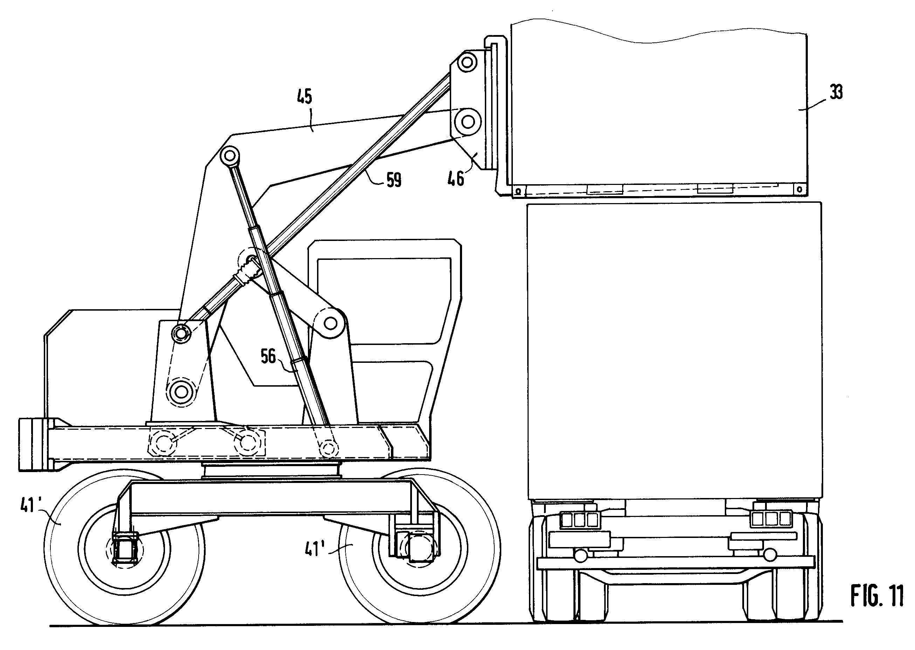

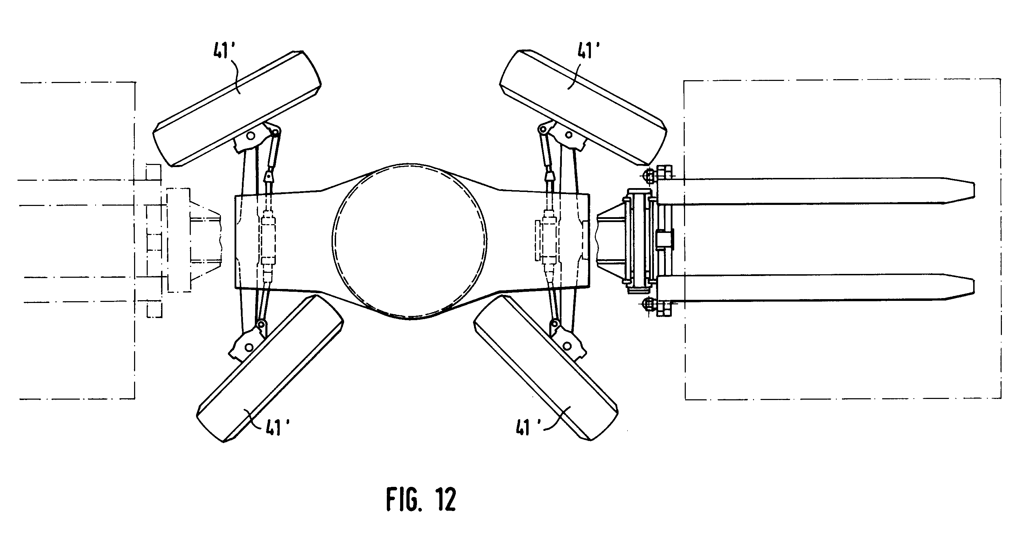

Eine wesentliche Besonderheit des Fahrzeugs nach den Figuren 8 bis 10, und in diesem Punkt besteht auch Übereinstimmung mit dem in anderen Punkten etwas abgewandelten Transportfahrzeug nach den Figuren 11 und 12, besteht in der Ausgestaltung der Hubvorrichtung mit einem schwingend aufgehängten Hubarm 45, der am freien Ende einen Gabelträger 46 trägt, an dem die beiden Staplergabeln 47 so befestigt sind, daß sie sowohl gegeneinander verfahrbar am Gabelträger 46 angeordnet sind, als auch gemeinsam ohne Abstandsänderung parallel zu sich verschoben werden können, so daß ohne Rangieren des Fahrzeugs die günstigste Untergreifposition eines Containers 33 eingestellt werden kann.

Der Hubarm 45 ist bei 48 an einem Schwingarm 49 aufgehängt, der am oberen Ende bei 50 an einem starren Bock 51 des Chassis, im vorliegenden Fall der oberen drehbaren Plattform, angelenkt ist. Das fahrzeugseitige Ende des Schwingarms ist bei 52 am Aufsatz 53 einer Gleitkonsole 54 angelenkt, die in Längsrichtung im Sinne des Doppelpfeils 55 frei verschiebbar ist, so daß beim Anheben des Hubarms 45 mit Hilfe des Hydraulikzylinders 56 nicht eine normale Anhebbewegung des freien Endes mit den Staplergabeln 57 auf einer Kreisbahn stattfindet, sondern statt dessen durch die Schwing- und Verfahrbewegung der Gleitkonsole eine praktisch vertikale Anhebbewegung, wie sie in Fig. 8 strichpunktiert in verschiedenen Hubstellungen angedeutet ist. Beim Ausfahren des Hubzylinders 56 wird der Hubarm 45 am Schwingarm 49 nach links verschoben, wobei in entsprechender Weise die Gleitkonsole nach links mit ausweicht, wobei durch die entsprechende Auswahl der Längen der verschiedenen Arme und der Anlenkpunkte zueinander die vorstehend beschriebene vertikale Hubbewegung zustande kommt, ohne daß man die üblicherweise für solche vertikale Hubbewegungen vorgesehenen Gabelstaplerhubsäulen benötigt. Derartige Gabelstaplerhubsäulen sind baulich sehr viel aufwendiger und behindern dabei vor allem auch noch die Sicht des Fahrers sowie die Abstellbarkeit des Containers direkt unter Dach.

Der Gabelträger 46 ist bei 57 mit dem Hubarm 45 verbunden und darüber bei 58 mit einer teleskopisch verstellbaren Parallelogrammführungsstange 59, die am anderen Ende bei 60 am Aufsatz 53 der Gleitkonsole 54 angelenkt ist. Dadurch ist die Parallelstellung der den Container 33 untergreifenden Gabelarme 47 beim Anheben gewährleistet.

Das Ausführungsbeispiel nach den Figuren 11 und 12 unterscheidet sich von dem nach den Figuren 8 bis 10 durch einen einfacheren Aufbau des eigentlichen allradgelenkten Fahrzeugchassis. Dabei ist, abgesehen davon, daß nur Einzelräder und nicht Zwillingsräder vorgesehen sind, bei diesem zweiten Ausführungsbeispiel vorgesehen, daß die Räder 41' um wenigstens bis zu 45° verstellbar sind, wobei die Verstellbarkeit in der in Fig. 12 erkennbaren Weise gegenläufig für die Vorder- und Hinterräder ausgeführt werden kann, so daß in der gezeigten 45°-Stellung nach Fig. 12 das Transportfahrzeug um seine zentrale vertikale Achse am Ort rotieren kann und somit ohne Versetzbewegung einen Container von der rechten Seite beispielsweise auf die linke oder eine der darüber- oder darunterliegenden um 90° versetzten Stellungen umsetzen kann, und dies selbstverständlich neben der üblichen normalen Verfahrbarkeit eines solchen Transportfahrzeugs. Die besondere Ausbildung der Hubeinrichtung mit einem schwingend aufgehängten Hubarm und der Ausgleichsbewegung zur Erzielung einer vertikalen Anhebung der Container, so daß ein solcher Container auch angehoben werden kann, wenn unmittelbar daneben ein weiterer Container angeordnet ist, was bei einer Kreisbahnanhebbewegung nicht der Fall wäre, ist bei der Ausführungsform nach den Figuren 11 und 12 in gleicher Weise realisiert wie bei der ersten Ausführungsform nach den Figuren 8 bis 10.

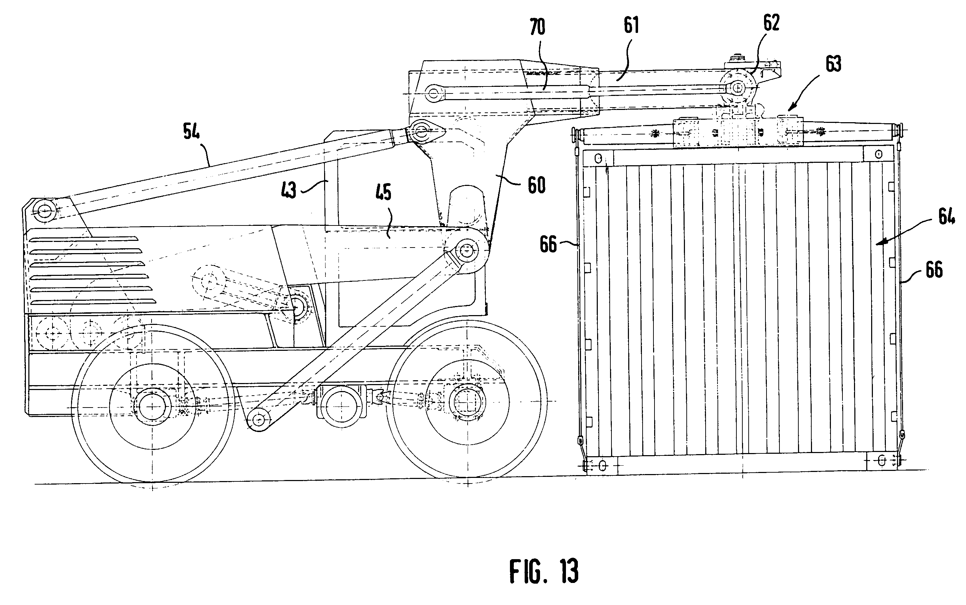

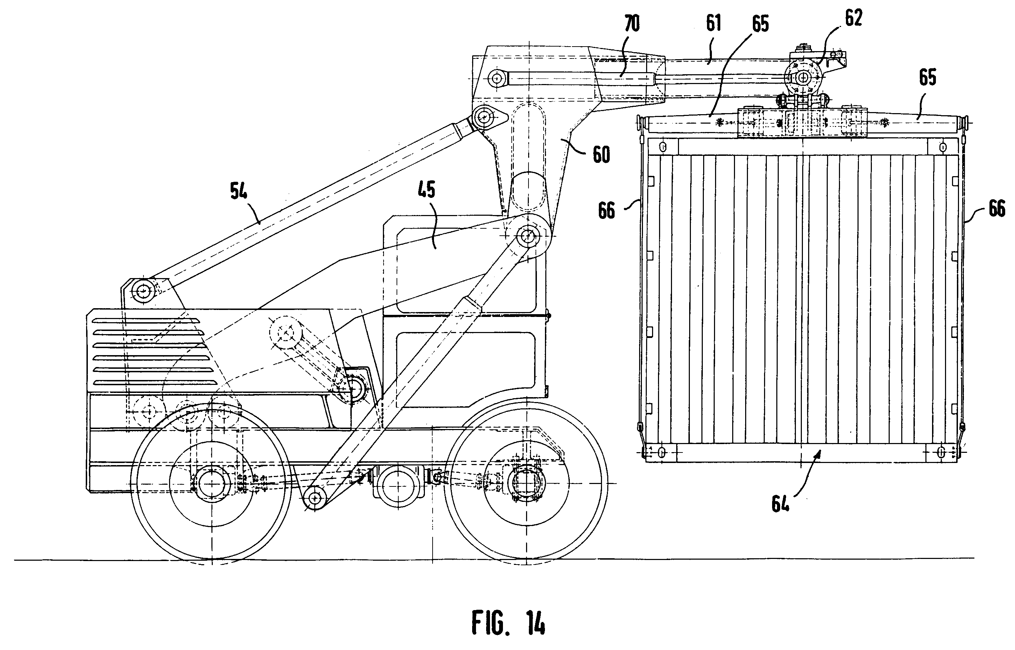

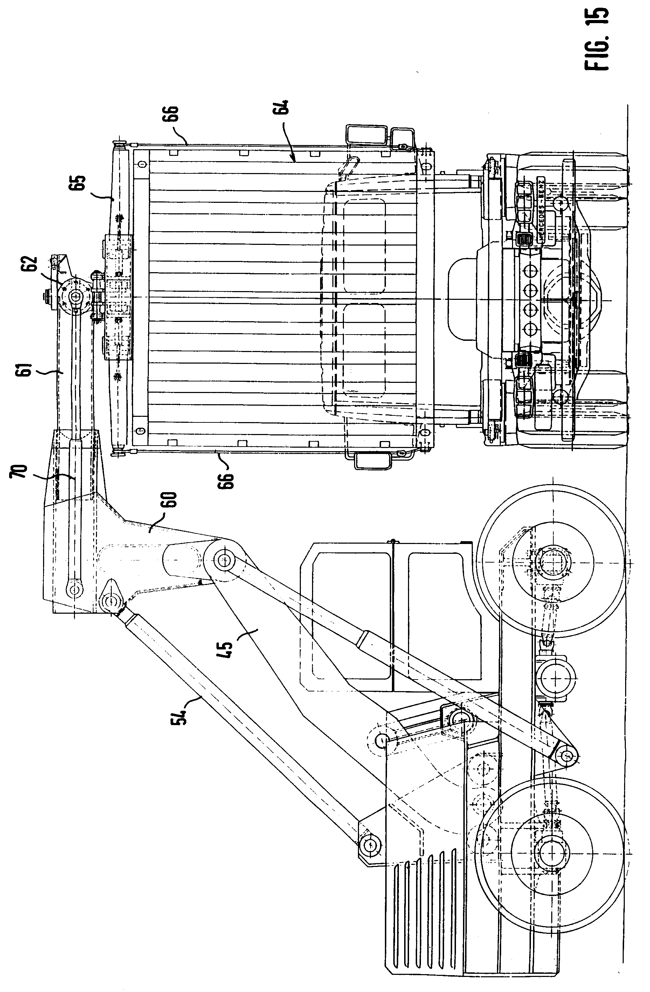

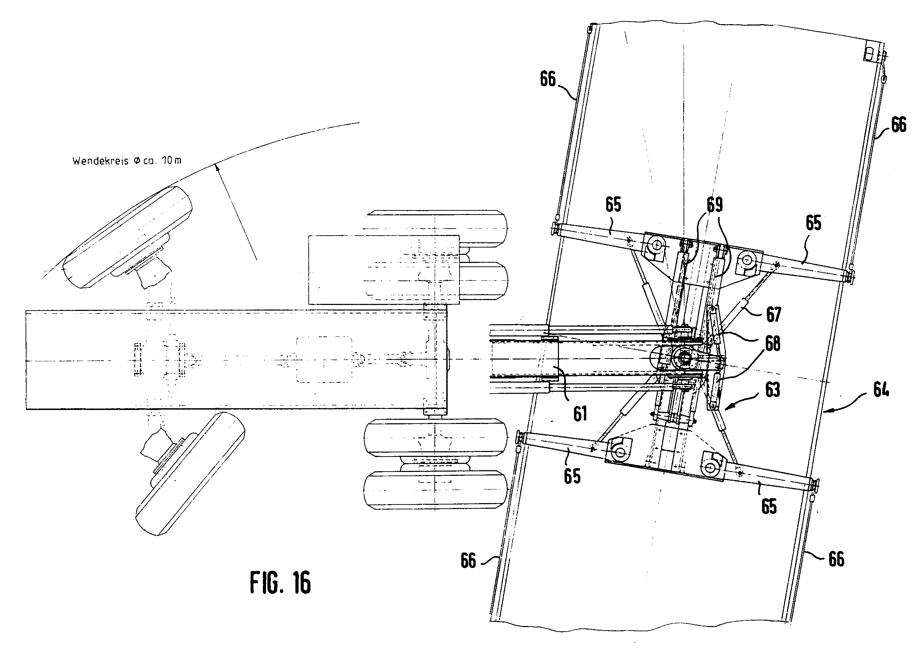

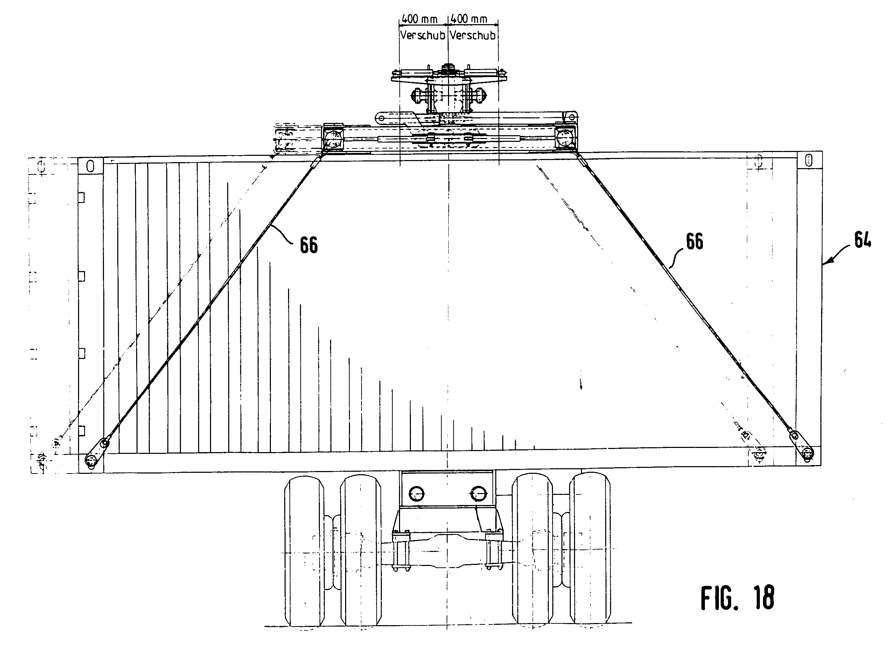

Anhand der Figuren 13 bis 21 ist ein abgewandeltes Transportfahrzeug mit einem Spreader zum Anheben von Containern dargestellt, wobei nachfolgend nur die wesentlichen Besonderheiten dieser abgewandelten Ausführungsform beschrieben werden. Die Grundkonstruktion mit dem schwingend aufgehängten Hubarm, dessen freies Ende sich im wesentlichen in einer vertikalen Ebene bewegt, ist auch in diesem Fall vorgesehen. Abgesehen von Vereinfachungen beim Fahrgestell und in den Achsen besteht die Besonderheit der Anordnung nach den Figuren 13 bis 21 darin, daß anstelle eines Gabelträgers ein Tragkopf für einen Spreader am Hubarm angelenkt ist.

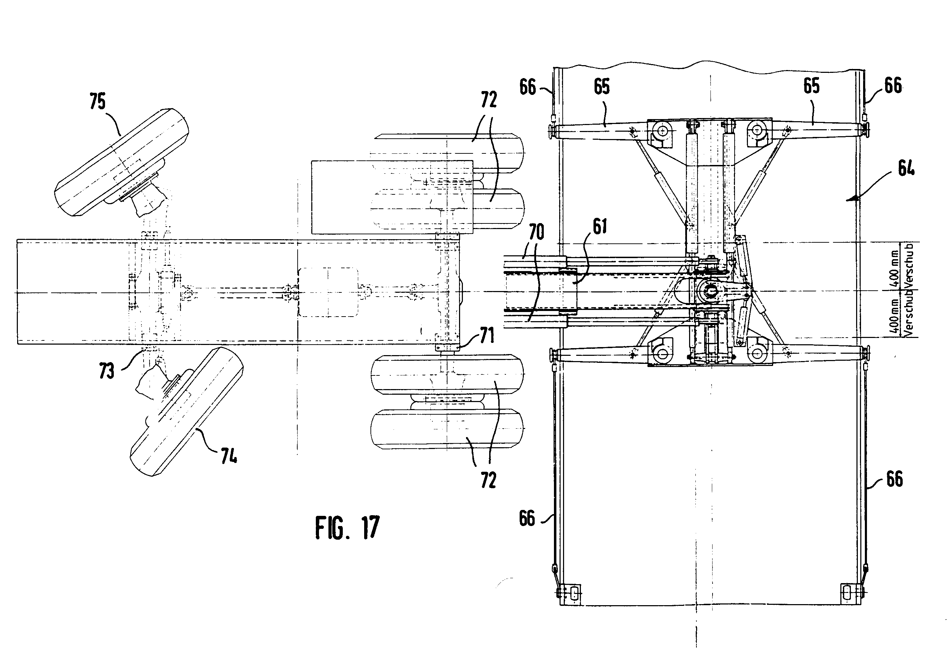

Dieser Spreader-Tragkopf 60 ist einmal am schwingend aufgehängten Hubarm 45 und zum anderen - analog wie der Gabelträger 46 der vorstehend beschriebenen Ausführungsform - an der teleskopisch verstellbaren Parallelogrammführungsstange 54 angelenkt. Im Spreader-Tragkopf ist ein Teleskoprohr als Tragarm 61 gelagert, das an seinem vorderen Ende einen Drehkopf 62 für den Spreader 63 trägt. Dieser Spreader ist gegenüber den aufzunehmenden Containern 64 stark verkürzt, d.h. er ist nicht in der bekannten Weise so ausgebildet, daß die Spreaderarme 65 die gesamte Deckfläche des Containers 64 übergreifen und in dessen obere Containereckverschlüsse einhängbar sind. Die Enden der Spreaderarme 65 sind vielmehr über schräglaufende Seile 66 mit den unteren Containereckverschlüssen verbunden, wobei zusätzlich die Spreaderarme 65 auch noch mittels Hydraulikzylindern 67 um 90° einschwenkbar sind, so daß in dieser eingeschwenkten Transportstellung der Spreader äußerst geringe Außenabmessungen aufweist, deren Vorteilhaftigkeit für einen Straßen- oder auch Containertransport weiter unten noch im einzelnen erläutert werden soll. Die Drehbewegung des Drehkopfs kann durch die Hydraulikzylinder 68 erfolgen. Bei 69 erkennt man zwei Hydraulikzylinder für einen Seitenschub im Spreader, um bei fester Anordnung des Spreaders 63 über dem Mittelpunkt des Containers durch eine Verschiebung des Aufhängepunkts, also der Drehachse des Drehkopfs 62, gegenüber den Spreaderarmen diese Drehachse über den möglicherweise gegenüber dem Containermittelpunkt versetzten Containerschwerpunkt bringen zu können. Diese Seitenverschiebung in einer Richtung ist in Fig. 17 dargestellt.

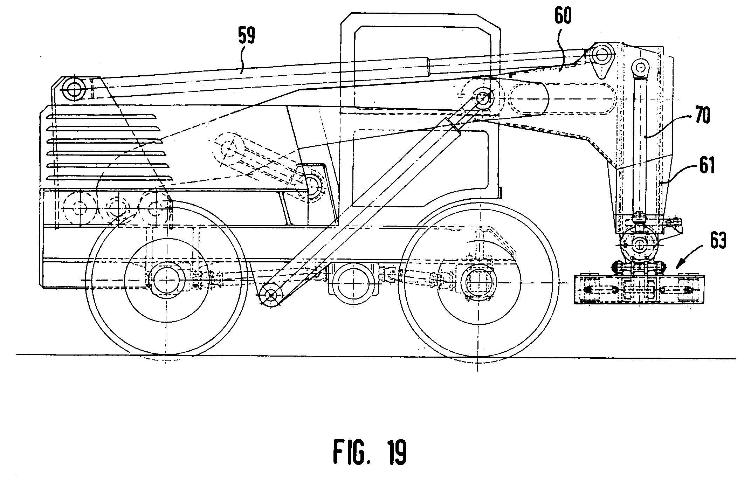

Das Aus- und Einfahren des Tragarms 61 erfolgt mit Hilfe der beiden seitlichen Hydraulikzylinder 70, wobei man die eingefahrene Stellung des Tragarms einerseits und auch der Spreaderarme 65 andererseits am besten in den Figuren 19 bis 21 ersehen kann. Dort erkennt man, daß in dieser eingefahrenen Transportstellung das Transportfahrzeug nach den Figuren 13 bis 21 als selbstfahrende Arbeitsmaschine auf Straßen fahren kann, was bei herkömmlichen Spreadern völlig ausgeschlossen ist, wobei in dieser Fahrstellung der Spreader-Tragkopf 60 gegenüber der Arbeitsstelung der vorhergehenden Figuren um 90° nach unten abgekippt ist, was durch einfaches Ausfahren der teleskopisch verstellbaren Parallelogrammführungsstange 59 erfolgen kann.

Als weitere Besonderheit weist die Ausführungsform nach den Figuren 13 bis 21 ein vereinfachtes Fahrgestell auf, bei dem auf der angetriebenen starren Vorderachse 71 Zwillingsräder 72 und auf der vorzugsweise ebenfalls angetriebenen angelenkten Hinterachse 73 Einzelräder 74, 75 vorgesehen sind, die einen engen Wendekreis von etwa 10 m ermöglichen. Der breite Radstand vorne in Verbindung mit den Zwillingsrädern ergibt eine besondere Geländegängigkeit.

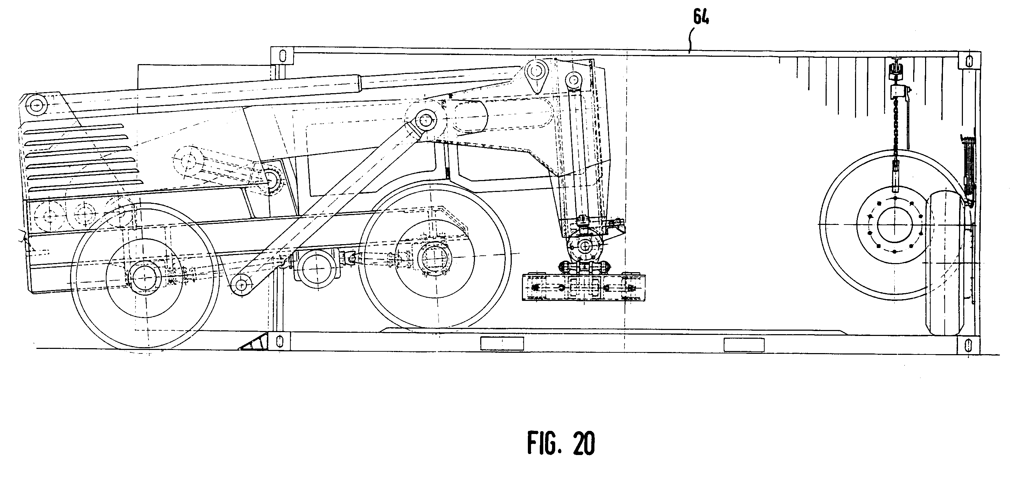

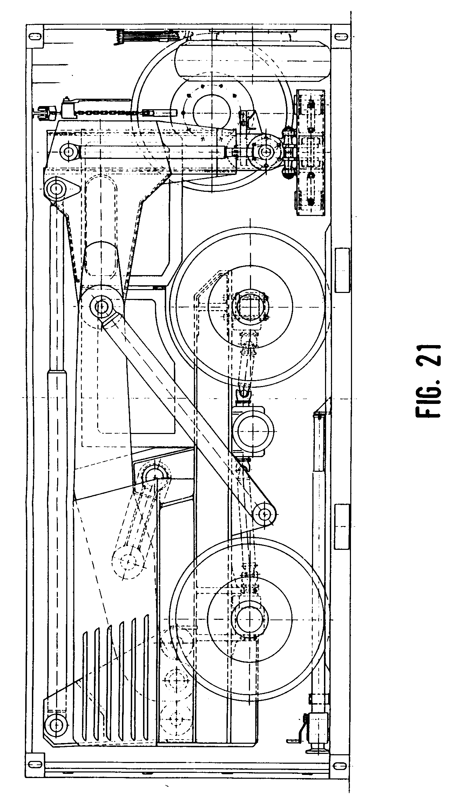

Als weitere Besonderheit der Ausführungsform nach den Figuren 13 bis 21 ist die Fahrerkabine 43 um die vordere Bodenkante schwenkbar am Chassis gelagert, so daß sie aus der nach oben ragenden Arbeitsposition in die Containertransportposition nach den Figuren 20 und 21 um etwa 90° flach aufliegend auf das Chassis nach unten verschwenkbar ist. Dies ermöglicht es, wie in den Figuren 20 und 21 gezeigt, daß ein derartiges Transportfahrzeug in einen Normcontainer 43 der Art, wie er vorstehend im Hinblick auf die Funktionsweise des Transportfahrzeugs als zu beförderndes Gut beschrieben worden ist, eingefahren und selbst in einem solchen Container mit Hilfe eines Transportfahrzeugs zu einem neuen Einsatzort transportiert werden kann. Dabei geht es bei diesem Containertransport natürlich weniger um den Transport auf der Straße, der ja auch mit Hilfe eines Tiefladers erfolgen könnte, sondern um einen Transport mit Hilfe von Flugzeugen oder Schiffen, um solche Transportfahrzeuge beispielsweise auf Großbaustellen im Ausland oder aber auf weit entfernt im Ausland befindliche Einsatzorte bei militärischen Operationen befördern zu können.

## Patentansprüche

1. Nutzfahrzeug zum Aufnehmen und Absetzen von auf der Ladeplattform über Roll- oder Gleitbahnen verschiebbaren und in der Transportstellung arretierbaren Containern, die durch eine rückwärtige Hubeinrichtung angehoben bzw. abgesenkt werden, dadurch gekennzeichnet, daß die Hubeinrichtung eine Ladebordwand (4) ist, die zwischen einer vertikalen Transportstellung und einer mit der Ladeplattform (1) fluchtenden horizontalen Übergabestellung und einer am Boden aufliegenden Aufnahmestellung verschwenk- und höhenverstellbar ist, und daß zur Verschiebung der Container (33) eine Seilwinde (6) mit seitlich neben dem Nutzfahrzeug verlaufenden Seilzügen (13, 14) vorgesehen ist, die am Container (33) angreifend um Rollen (38) am freien Ende der Ladebordwand (4) umlenkbar sind.

2. Nutzfahrzeug nach Anspruch 1, dadurch gekennzeichnet, daß die Ladebordwand (4) über seitliche Parallelogrammgestänge (25, 26) am Fahrzeug angelenkt ist, deren untere Strebe (26) als Hydraulikzylinder zur Verschwenkung zwischen der Horizontalen und der Vertikalen ausgebildet ist.

3. Nutzfahrzeug nach Anspruch 2, dadurch gekennzeichnet, daß das Parallelogrammgestänge ein unvollständiges Parallelogramm mit beidends unterschiedlichen Abständen der übereinanderliegenden Anlenkpunkte bildet.

4. Nutzfahrzeug nach einem der Ansprüche 1 bis 3, dadurch gekennzeichnet, daß die Ladebordwand (4) von horizontal liegend im Fahrzeugrahmen eingebauten Hydraulikzylindern (28) über Ketten (29) oder Seilzüge anhebbar ist.

5. Nutzfahrzeug nach Anspruch 4, dadurch gekennzeichnet, daß die Umlenkzahnräder (30) beidseits des Nutzfahrzeugs durch eine starre Gleichlaufwelle gekoppelt sind.

6. Nutzfahrzeug nach einem der Ansprüche 1 bis 5, gekennzeichnet durch vorzugsweise hydraulische Abstützungen (S) des Fahrzeugs im Bereich der Anlenkung der Ladebordwand (4).

7. Nutzfahrzeug nach einem der Ansprüche 1 bis 6, dadurch gekennzeichnet, daß die Seilwinde (6) am vorderen Ende der Ladeplattform (1) angeordnet ist und die Seilzüge (13, 14) über seitlich ausfahrbare Umlenkrollen (23, 24) geführt sind.

8. Nutzfahrzeug nach einem der Ansprüche 1 bis 7, dadurch gekennzeichnet, daß die Seilzüge (13, 14) auf zwei nebeneinander angeordneten Seiltrommeln (8, 9) aufgewickelt sind, die mittels stirnseitiger Zahnräder (11, 12) miteinander gekuppelt sind und von denen die eine auf der Abtriebswelle eines Motors (10) sitzt.

9. Nutzfahrzeug nach Anspruch 8, gekennzeichnet durch mit den Seiltrommeln (8, 9) vorzugsweise über einen Kettenantrieb (19, 20) in Drehverbindung stehende, seitlich neben ihnen angeordnete Auszieh-Seilrollen (15, 16) mit Seilandruckkulissen (17, 18).

10. Nutzfahrzeug nach einem der Ansprüche 1 bis 9, gekennzeichnet durch eine mit dem Container verriegelbare Rollenpalette (Flat 34).

11. Transportfahrzeug zum Laden und Umsetzen von Containern, insb. von Nutzfahrzeugen nach einem der Ansprüche 1 bis 10, in Form eines allradgelenkten Fahrzeugs mit einer Fahrerkabine und einer Hubvorrichtung, dadurch gekennzeichnet, daß die Hubvorrichtung (42) einen schwingend aufgehängten Hubarm (45) aufweist, der zwischen dem freien Ende und dem auf einer Gleitkonsole (54) linear verschiebbar am Fahrzeug angelenkten Ende an einem schwenkbar am Fahrzeug aufgehängten Schwingarm (49) angelenkt und durch einen vorzugsweise Hydraulik-Hubzylinder (56) verstellbar ist, wobei die Anordnung so getroffen ist, daß beim Betätigen des Hubzylinders (56) die Gleitkonsole (54) so verschoben wird, daß das freie Ende des Hubarms (45) im wesentlichen in einer vertikalen Ebene bewegt wird.

12. Transportfahrzeug nach Anspruch 11, dadurch gekennzeichnet, daß ein am Hubarm (45) angelenktes Hebezeug, z.B. ein Gabelträger (46) oder ein Tragkopf (60) für einen Spreader (63) über eine teleskopisch verstellbare Parallelogrammführungsstange (59) mit dem Aufsatz (53) der Gleitkonsole (54) verbunden ist.

13. Transportfahrzeug nach Anspruch 11 oder 12, dadurch gekennzeichnet, daß die Hubvorrichtung (42) mit der Fahrerkabine (43) auf einer gegenüber dem Fahrzeuggrundrahmen (40) mit den Rädern drehbaren Plattform (44) angeordnet ist.

14. Transportfahrzeug nach einem der Ansprüche 11 bis 13, dadurch gekennzeichnet, daß die Vorder- und Hinterräder jeweils synchron versetzt um 45° verstellbar sind, derart, daß das Fahrzeug insgesamt sich am Ort um seine vertikale Mittelachse dreht.

15. Transportfahrzeug nach einem der Ansprüche 11 bis 13, dadurch gekennzeichnet, daß die, vorzugsweise als mittig zwischen den Einzelreifen aufgehängte Zwillingsreifen ausgebildeten, Räder jeweils um 90° verschwenkbar sind.

16. Transportfahrzeug nach einem der Ansprüche 1 bis 13, dadurch gekennzeichnet, daß es vorne mit starren Zwillingsrädern und einer pendelnd aufgehängten angelenkten Hinterachse mit Einzelrädern versehen ist, wobei vorzugsweise beide Achsen angetrieben sind.

17. Transportfahrzeug nach einem der Ansprüche 11 bis 16, dadurch gekennzeichnet, daß die Fahrerkabine (43) seitlich verschiebbar ist.

18. Transportfahrzeug nach einem der Ansprüche 11 bis 16, dadurch gekennzeichnet, daß die Fahrerkabine zwischen zwei Hubarmen (45) angeordnet ist.

19. Transportfahrzeug nach einem der Ansprüche 11 bis 16, dadurch gekennzeichnet, daß die Fahrerkabine (43') um eine Bodenkante um ca. 90° in eine flachliegende Transportstellung auf das Chassis verschwenkbar ist.

20. Transportfahrzeug nach einem der Ansprüche 11 bis 19, dadurch gekennzeichnet, daß der Spreader an einem Drehkopf am freien Ende eines am Spreader-Tragkopf befestigten längsverstellbaren Tragarms aufgehängt ist.

21. Transportfahrzeug nach einem der Ansprüche 11 bis 20, dadurch gekennzeichnet, daß der Spreader mit einem, vorzugsweise hydraulischen, Seitenschub zum Ausgleich von Versetzungen des Containerschwerpunktes versehen ist.

22. Transportfahrzeug nach einem der Ansprüche 11 bis 21, dadurch gekennzeichnet, daß der gegenüber einem Norm-Container verkürzte Spreader vorzugsweise hydraulisch aus- und einschwenkbare Spreader-Arme aufweist, deren den Container in der ausgeschwenkten Arbeitsstellung seitlich überragende Enden mittels schräg verlaufender Seile mit den unteren Containereckverschlüssen verbindbar sind.

23. Transportfahrzeug nach einem der Ansprüche 11 bis 22, dadurch gekennzeichnet, daß der Spreader-Tragkopf um etwa 90° aus der Arbeitsstellung in eine nach unten geklappte Transportstellung verschwenkbar ist.

24. Transportfahrzeug nach einem der Ansprüche 11 bis 23, gekennzeichnet durch ein Video-Überwachungssystem mit einer am vorderen Ende des Chassis befestigten Videokamera und einem Monitor in der Fahrerkabine.
